# EUROPÄISCHE PATENTSCHRIFT

(11) **EP 3 954 600 B1**
(45) Veröffentlichungstag und Bekanntmachung des Hinweises auf die Patenterteilung: **08.11.2023**
(21) Anmeldenummer: 21189638.6
(22) Anmeldetag: 04.08.2021
(51) Int. Cl.: B62K 21/00, B66D 1/34, B62K 7/04

(54) **SEILZUG-LENKSCHEIBE**
PULLEY STEERING DISC
DISQUE DE DIRECTION À CÂBLE

(30) Priorität: 13.08.2020 DE 202020104705 U
(43) Veröffentlichungstag der Anmeldung: 16.02.2022
(73) Patentinhaber: RTI Sports GmbH, 56070 Koblenz (DE)
(72) Erfinder: CLAUSSEN, Justin, 53343 Wachtberg/ Pech (DE); GRAEVE, Arndt, 56072 Koblenz (DE)
(74) Vertreter: dompatent von Kreisler Selting Werner - Partnerschaft von Patent- und Rechtsanwälten mbB

(56) Entgegenhaltungen:
- DE-U1-202013 007 598
- JP-A- 2010 107 025
- US-A1- 2009 007 708
- US-A1- 2010 192 721
- US-A1- 2016 030 271

## Beschreibung

Die Erfindung betrifft eine Seilzuglenkscheibe für eine Fahrrad-Lenkeinrichtung.

Bei Fahrrädern, insbesondere bei Lasten-Fahrrädern, ist eine Aufnahmebox für Lasten, wie Personen oder Güter gegebenenfalls zwischen einem Lenker und einem Vorderrad angeordnet. Es ist daher erforderlich, die Lenkbewegung auf das Vorderrad zu übertragen. Dies erfolgt beispielsweise über ein Gestänge. Dies hat jedoch den Nachteil, dass Gestänge gegebenenfalls verbiegen können und die Kraftübertragung über Gelenke im Gestänge erfolgen muss. Ferner besteht bei der Verwendung von Gegenständen der Nachteil, dass über ein Gestänge nur ein eingeschränkter Lenkwinkel realisiert werden kann und Gestänge zu Geräuschentwicklungen neigen.

Ferner weist das Vorsehen von Gestängen den wesentlichen Nachteil auf, dass hierfür häufig unter dem Rahmen ein entsprechend großer Bauraum vorgesehen sein muss. Hierdurch ist die realisierbare Bodenfreiheit stark beschränkt.

Es ist ferner bekannt die Lenkbewegung auf das Vorderrad über Seilzüge zu übertragen. Derartige Seilzüge oder dergleichen weisen ein Lenkzugpaar auf, wobei je nach Lenkrichtung eine Zugkraft von jeweils einem der beiden Lenkzüge des Lenkzugpaars übertragen wird. Dies ist hierin begründet, dass durch derartige Lenkzüge nur Zugkräfte und keine Druckkräfte übertragen werden können. Lenkzüge weisen jedoch den Nachteil auf, dass diese sich aufgrund der Krafteinwirkung längen können und insofern ein Spannen oder Nachjustieren der Lenkzüge erforderlich ist.

Eine Spanneinrichtung für Lenkzüge ist aus einem in US 4,838,568 beschriebenen Liegerad bekannt. Hierin ist beschrieben, dass die Lage von Umlenkrollen des Seilzugs zum Spannen des Seilzugs veränderbar ist. Eine derartige Spann- bzw. Justagevorrichtung kann jedoch nur bei Lenkzugpaaren mit Umlenkrollen vorgesehen werden.

Des Weiteren ist es aus DE19734849 bekannt, bei einer Lenkung für ein Sitzoder Liegerad innerhalb des Lenkzuges ein Spannelement vorzusehen, durch das die Länge des Zuges selbst verändert wird.

In US2010/1927271 ist eine Seilzug-Lenkscheibe mit den Merkmalen des Oberbegriffs des Anspruchs 1 beschrieben.

Aufgabe der Erfindung ist es, eine Seilzug-Lenkscheibe zu schaffen, mit der ein einfaches und zuverlässiges Spannen bzw. Justieren der Lenkzüge möglich ist.

Die Lösung der Aufgabe erfolgt erfindungsgemäß durch eine Seilzug-Lenkscheibe gemäß Anspruch 1.

Die erfindungsgemäße Seilzug-Lenkscheibe ist insbesondere für Fahrradlenkeinrichtungen geeignet. Besonders geeignet ist die erfindungsgemäße Seilzug-Lenkeinrichtung für Lastenräder, bei denen die Lenkung über Seilzüge erfolgt. Die erfindungsgemäße Seilzug-Lenkscheibe, die häufig auch als Lenkrollen bezeichnet werden, weist eine Halteeinrichtung zum Verbinden mit einer Lenkerstange und/oder einem Gabelschaft auf. Die Halteeinrichtung dient hier vorzugsweise zum unmittelbaren Verbinden mit einer Lenkerstange bzw. einer Lenkerschaft und/oder einem Gabelschaft. Die Halteeinrichtung trägt die Lenkscheibe und verbindet diese mittelbar oder unmittelbar mit dem Gabelschaft oder dem Lenkerschaft. Insbesondere umgibt im montierten Zustand die Seilzug-Lenkscheibe den Lenkerschaft und/oder den Gabelschaft zumindest teilweise. Ferner weist die Seilzug-Lenkscheibe ein die Halteeinrichtung zumindest teilweise umgebendes Führungselement für ein Lenkzugpaar auf. Das Führungselement weist beispielsweise einander gegenüberliegende Rillen auf, wobei in den Rillen jeweils ein Bowdenzug angeordnet ist. Hierbei kann ein Lenkzugpaar vorgesehen sein. Gegebenenfalls sind für jede Lenkrichtung zwei Lenkzüge vorgesehen, so dass zwei Lenkzugpaare vorgesehen sind. Hierdurch ist ein redundantes System geschaffen und vermieden, dass beispielsweise beim Reißen eines Bowdenzugs ein Lenken nicht mehr möglich ist. Zum Fixieren der Enden der Lenkzüge weist die erfindungsgemäße Seilzug-Lenkscheibe ein Fixierelement auf. Bei einer Lenkeinrichtung sind üblicherweise zwei Seilzuglenkscheiben vorgesehen, wobei eine am Lenkerschaft und die andere am Gabelschaft angeordnet ist. Entsprechende Fixierelemente könnten in beiden Seillzug-Lenkscheiben vorgesehen sein, so dass jeweils beide Enden der Seilzüge fixiert sind. Die beiden Seilzug-Lenkscheiben einer derartigen Lenkvorrichtung können identisch ausgebildet sein. Gegebenenfalls ist nur eine der beiden Seilzug-Lenkscheiben erfindungsgemäß ausgebildet. Ggf können sich die Lenkvorrichtungen im Durchmesser unterscheiden, um eine Lenkübersetzung zu erzielen.

Erfindungsgemäß weist die Seilzug-Lenkscheibe ein Spannelement auf. Das Spannelement dient vorzugsweise zum automatischen Spannen der Lenkzüge. Das Spannelement ist vorzugsweise derart ausgebildet, dass es auf das Fixierelement einwirkt. Insbesondere erfolgt durch das Spannelement ein Aufbringen einer Kraft auf das Fixierelement die zum Aufbringen einer Zugkraft auf die Lenkzüge führt. Hierdurch ist auf einfache Weise ein insbesondere automatisches Spannen der Lenkzüge realisiert. Erfindungsgemäß ist das Spannelement in die Seilzug-Lenkeinrichtung integriert bzw. im Wesentlichen innerhalb der Seilzug-Lenkscheibe angeordnet.Das Spannelement kann auch als manuelles Spannelement ausgebildet sein. Beispielsweise kann es sich um eine Spannschraube handeln, die mittelbar oder unmittelbar auf das Fixierelement einwirkt.

Hierdurch ist ein manuelles Spannen der Seilzüge realisiert.

Unabhängig davon, ob es sich um ein Spannelement handelt, durch das ein automatisches Spannen erfolgt oder ob es sich um ein Spannelement zum manuellen Spannen der Seilzüge handelt, ist es erfindungsgemäß bevorzugt, dass das Spannelement nicht unmittelbar auf die Seilzüge einwirkt und insbesondere nicht in die Seilzüge integriert ist. Vielmehr erfolgt in besonders bevorzugter Ausführungsform der Erfindung ein mittelbares Spannen der Seilzüge derart, dass das Spannelement auf das Fixierelement der Spannelemente einwirkt. Die Seilzüge selber sind somit durch ein Spannelement nicht beeinflusst, insbesondere nicht geschwächt. Insbesondere erfolgt die Kraftübertragung beim Lenken nicht unmittelbar über das Spannelement.

Vorzugsweise ist das Fixierelement derart angeordnet bzw. ausgebildet, dass es verschwenkbar oder verschiebbar ist. Durch eine derartige Bewegung des Fixierelements kann die automatische Justage der Lenkzüge bzw. ein automatisches Spannen der Lenkzüge auf einfache Weise sichergestellt werden.

Erfindungsgemäß weist das Fixierelement einen Schwenkhebel auf. Der Schwenkhebel ist über eine Schwenkachse mit einem Basiselement der SeilzugLenkscheibe wie einem Grundkörper an dem Gehäuse oder dergleichen verbunden. Das Basiselement kann auch das Führungselement tragen oder einstückig mit dem Führungselement verbunden bzw. ausgebildet sein. Durch Vorsehen eines Schwenkhebels zumindest als Teil des Fixierelements ist es auf einfache Weise möglich, durch ein Spannelement wie eine Spannfeder, einen Elastomerkörper oder dergleichen eine Kraft auf den Schwenkheben aufzubringen. Hierdurch kann eine insbesondere konstante Zugkraft auf Lenkzüge übertragen werden. Es ist möglich, dass je Lenkzug ein Fixierelement oder insbesondere ein Schwenkhebel vorgesehen ist und somit auch bei einer unterschiedlichen Längung der Lenkzüge diese stets gespannt sind. Auch können beispielsweise zwei Lenkzüge mit einem Fixierelement verbunden sein oder es ist auch möglich, dass sämtliche, insbesondere vier Lenkzüge bei einem redundanten System mit dem Fixierelement verbunden sind und nur ein einziger Schwenkhebel vorgesehen ist.

Das insbesondere als Spannfeder, d.h. vorzugsweise als Zug- oder Druckfeder ausgebildete Spannelement ist in bevorzugter Weiterbildung der Erfindung mit dem freien Ende des Schwenkhebels verbunden. Das freie Ende des Schwenkhebels ist das der Schwenkachse gegenüberliegende Ende des Schwenkhebels. Dies hat den Vorteil, dass der Hebelarm des Schwenkhebels genutzt wird und insofern eine Feder mit geringerer Federkraft genutzt werden kann.

Bevorzugt ist es des Weiteren, insbesondere bei einer Verbindung des Spannelements mit dem freien Ende des mindestens einen Schwenkhebels, dass die Fixierung der Lenkzüge in einem mittleren Bereich des Schwenkhebels erfolgt. Hierdurch kann insbesondere bei Vorsehen eines einzigen Schwenkhebels eine möglichst symmetrische Anordnung der für das Lenken nach links vorgesehenen Lenkzüge.

Bei einer besonders bevorzugten Weiterbildung der Erfindung ist ein Hemmungselement vorgesehen. Das Hemmungselement dient dazu, dass die Lenkzüge nur in eine Richtung bewegt werden können, so dass ein Bewegen der Lenkzüge vorzugsweise entgegen der Spannrichtung verhindert ist. Hierdurch ist vermieden, dass ein gespannter Lenkzug sich wieder lockert.

Bei der erfindungsgemäß bevorzugten Ausführungsform, bei der das Fixierelement mindestens einen Schwenkhebel aufweist, ist es bei einem manuell betätigbaren Spannelement bevorzugt, dass dieses auf den Schwenkhebel einwirkt. Ein beispielsweise als Schraube ausgebildetes manuelles Spannelement kann beispielsweise auf eine Vorderseite des mindestens einen Schwenkhebels einwirken. Mit Hilfe der Schraube kann somit ein Bewegen des Schwenkhebels, d.h. ein Verdrehen des Schwenkhebels erfolgen, so dass hierdurch ein Spannen der Seilzüge realisiert ist. Hierbei kann das als Schraube ausgebildete Spannelement mittel- oder unmittelbar auf den mindestens einen Schwenkhebel einwirken, insbesondere auf eine Vorderseite eines Schwenkhebels drücken. Die Vorderseite des mindestens einen Schwenkhebels ist hierbei insbesondere diejenige Seite, an der die Seilzüge befestigt sind. Ein als Schraube ausgebildetes Spannelement wirkt somit vorzugsweise im Wesentlichen in Richtung der Zugkraft der Seilzüge im Bereich des Schwenkhebels. Eine derartige Spannschraube kann jedoch auch auf eine andere Weise auf den mindestens einen Spannhebel einwirken. So könnte die Spannschraube auch auf der Rückseite des Spannhebels an diesem zum Spannen der Seilzüge ziehen. Des Weiteren könnte ein Spannelement als Exzenter ausgebildet sein, so dass durch ein Drehen des Exzenters eine Kraft auf den mindestens einen Spannhebel aufgebracht wird, die zum Spannen der Seilzüge dient. Ein derartiger Exzenter kann beispielsweise wieder auf eine Vorderseite des mindestens einen Spannhebels einwirken. Auch könnte ein Spannelement in die Schwenkachse des mindestens einen Schwenkhebels integriert sein.

Das Spannelement dient dazu die Seilzüge bei Vorspannungsverlust zu spannen, wobei diese sodann über das Hemmungselement geklemmt werden. Insbesondere ist durch Vorsehen eines Hemmungselements vermieden, dass beim Lenken die Lenkkräfte stets auf das Spannelement, insbesondere die Spannfeder übertragen werden. Je nach Ausgestaltung des Hemmungselements kann ein gemeinsames Hemmungselement für ein Paar an Lenkzügen, für zwei redundante Lenkzüge oder für alle Lenkzüge gemeinsam vorgesehen sein. Insbesondere ist es auch möglich, je Lenkzug ein Hemmungselement vorzusehen. Das mindestens eine Hemmungselement ist hierbei vorzugsweise derart ausgebildet, dass ein Lösen im Betrieb nicht möglich ist, jedoch beispielsweise zum Auswechseln oder zur manuellen Justage der Lenkzüge das Hemmungselement gelöst werden kann.

Als Hemmungselement können beispielsweise Verzahnungen mit Klinken, ähnlich eines Freilaufs vorgesehen sein. Eine derartige Klinkenverzahnung könnte im Bereich der Schwenkachse, d.h. Schwenkhebel ausgebildeten Fixierelements oder auch im Bereich des freien Endes des Schwenkhebels angeordnet sein.

Bevorzugt ist es, dass das mindestens eine Hemmungselement einen Klemmhebel aufweist. Dieser ist insbesondere derart ausgestaltet, dass eine Anlagefläche eines schwenkbaren Klemmhebels an dem Lenkzug anliegt. Der Klemmhebel drückt gegen eine gegenüberliegende Anlagefläche oder einen symmetrisch angeordneten zweiten Klemmhebel. Die Klemmelemente sind hierbei derart ausgebildet bzw. angeordnet, dass der Lenkzug bei einem Bewegen entgegen der Spannrichtung geklemmt bzw. fixiert wird.

Ebenso ist es möglich, dass ein Klemmhebel auf das Fixierelement einwirkt. Insbesondere kann ein Klemmhebel an dem Teil des Fixierelements, des Schwenkhebels des Fixierelements anliegen, der die Schwenkachse umgibt. Auch hier würde der Klemmhebel bewirken, dass der Schwenkhebel des Fixierelements nur in eine Richtung bewegt werden kann. Hierbei handelt es sich um die Richtung, die der Schwenkhebel zum Spannen der Lenkzüge bewegt wird. In eine entgegengesetzte Richtung könnte der Schwenkhebel sodann nur beim manuellen Lösen des Klemmelements bewegt werden.

Des Weiteren kann die erfindungsgemäße Seilzug-Lenkscheibe insbesondere zwei Umlenkelemente aufweisen. Die Umlenkelemente dienen zum Umlenken der Lenkzüge und sind insbesondere zwischen dem Führungselement und dem Fixierelement angeordnet. Das Führungselement, das insbesondere zwei einander gegenüberliegende Führungsrillen aufweist, führt somit zwei Lenkzüge zum Lenken nach links und rechts entlang einer Außenseite eines insbesondere sphärisch ausgebildeten Führungselements. Die beiden Lenkzüge werden sodann von den beiden Umlenkelementen zu dem Fixierelement umgelenkt. Hierzu ist es bevorzugt, dass die Umlenkelemente eine sphärische Außenfläche aufweisen, an der die Lenkzüge entlanggleiten. Die Umlenkelemente sind somit zwischen dem Führungselement und dem Fixierelement angeordnet. Besonders bevorzugt ist es in dieser Ausführungsform, dass Hemmungselemente, insbesondere Klemmhebel derart ausgebildet sind, dass die Umlenkelemente als Gegenfläche dienen, gegen die der Klemmhebel drückt, so dass die Lenkzüge entgegen einer Spannrichtung klemmend zwischen dem Klemmhebel und dem entsprechenden Umlenkelement gehalten sind.

Bei einer besonders bevorzugten alternativen Ausführungsform kann das Hemmungselement fest mit dem Basiselement verbunden sein. Hierbei ist es bevorzugt, dass das Hemmungselement eine Klemmfläche aufweist, wobei das Vorsehen einer Klemmfläche am Hemmungselement unabhängig von der Fixierung des Hemmungselements am Basiselement ist. Vorzugsweise ist die Klemmfläche derart angeordnet bzw. ausgerichtet, dass sie einen Winkel von ungleich null Grad zu einer durch das Spannelement auf das Fixierelement einwirkenden Kraftrichtung aufweist. Insbesondere ist der Winkel hierbei derart ausgerichtet, dass entgegen der Kraftrichtung des Spannelements ein klemmendes Fixieren erfolgt.

Besonders bevorzugt ist es, dass bei dieser bevorzugten Ausführungsform zwischen dem Fixierelement und dem Spannelement ein Verbindungselement angeordnet ist. Hierbei wirkt die Klemmfläche des Hemmungselements insbesondere auf dieses Verbindungselement ein. Bevorzugt ist es hierbei, dass das Verbindungselement eine mit der Klemmfläche des Hemmungselements zusammenwirkende Klemmfläche aufweist. Die Klemmflächen können derart herausgebildet sein, dass aufgrund von Reibungskräften ein Klemmen erfolgt. Ferner können an den Klemmflächen Rastelemente, Zähne, Ansätze oder dergleichen vorgesehen sei. Ein Vorsehen derartiger, einen gegebenenfalls zusätzlichen Formschluss bewirkenden Elementen, ist insbesondere eine entsprechende Neigung bezogen auf die Kraftrichtung nicht oder nur in geringerem Maße erforderlich.

Besonders bevorzugt ist es, dass das Spannen der Seilzüge automatisch erfolgt, wobei jedoch eine manuelle Justage ebenfalls möglich ist. Auch bei einer manuellen Justage ist es bevorzugt, ein Hemmungselement, wie vorstehend beschrieben, vorzuziehen. Ein erforderliches gegebenenfalls manuelles Nachjustieren kann durch Überprüfen der Seilspannung erfolgen. Auch stellt ein Benutzer fest, dass ein Nachspannen erforderlich ist, da die Lenkung ungenauer bzw. schwammiger wird.

Ferner ist es bevorzugt, dass eine Justageanzeige vorgesehen ist. Mithilfe der Justageanzeige ist es möglich anzuzeigen wie stark die Lenkzüge bereits nachgespannt wurden, bzw. ob eine Nachspannung noch möglich ist. Hierdurch ist es auf einfache Weise möglich festzustellen, ob sich während des Betriebs die Seilzüge bereits um einen Betrag gelenkt haben, sodass ein weiteres Nachspannen nicht mehr möglich ist. Mit der erfindungsgemäßen Spanneinrichtung ist ein Nachspannen der Lenkzüge vorzugsweise in einem Bereich von 4-8 mm möglich. Die Justageanzeige kann ein mit dem Fixierelement mittelbar oder unmittelbar verbundenes Zeigeelement aufweisen. Dies wirkt mit einer Skala zusammen. Die Skala ist insbesondere an einem fest mit dem Basisteil verbundenen Bauteil vorgesehen. Selbstverständlich kann die Anordnung des Zeigerelements und der Skala auch vertauscht werden, da es unerheblich ist, ob die Skala oder das Zeigerelement bewegt wird. Nachfolgend wird die Erfindung anhand bevorzugter Ausführungsformen, unter Bezugnahme auf die anliegenden Zeichnungen näher erläutert.

Es zeigen:
- Figur 1: eine schematische perspektivische Seitenansicht eines Lastenfahrrads,
- Figur 2: eine schematische perspektivische Ansicht einer ersten Ausführungsform einer erfindungsgemäßen Seilzug-Lenkscheibe,
- Figur 3: eine schematische Draufsicht der in Figur 2 dargestellten Seilzug-Lenkscheibe,
- Figur 4: eine schematische Detailansicht einer bevorzugten Ausführungsform eines Hemmungselements und
- Figur 5: eine schematische Draufsicht einer weiteren bevorzugten Ausführungsform einer erfindungsgemäßen Seilzug-Lenkscheibe,
- Figur 6: eine schematische perspektivische Ansicht der in Figur 5 dargestellten Seilzug-Lenkscheibe und
- Figur 7: einer der Figur 6 entsprechenden perspektivischen Ansicht, bei der die Seilzug-Lenkscheibe mit einem Deckelelement verschlossen ist.

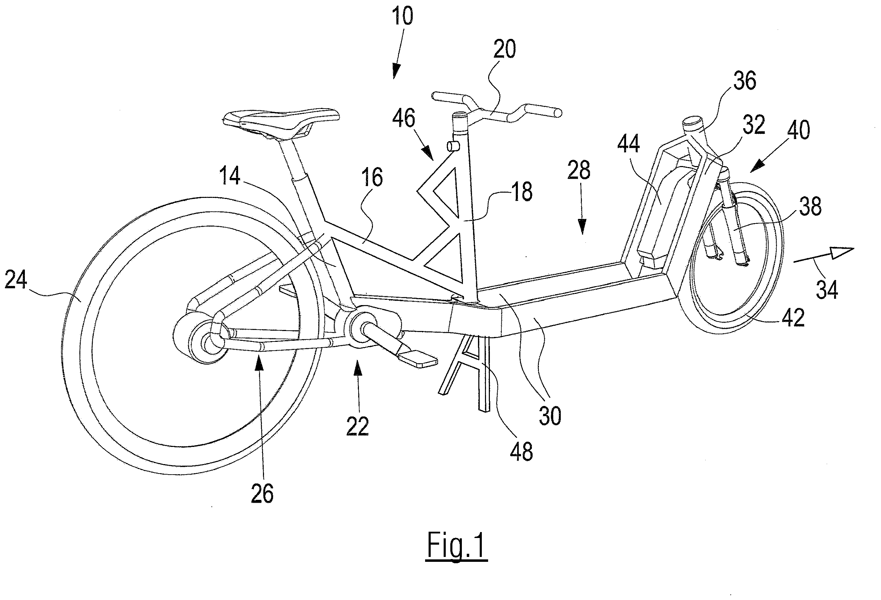

Eine bevorzugte Ausführungsform des erfindungsgemäßen Lastenfahrrads wie in Figur 1 dargestellt weist einen Lastenfahrrad-Rahmen 10 auf. Der Lastenfahrrad-Rahmen 10 weist im dargestellten Ausführungsbeispiel ein Sattelrohr 14, ein Unterrohr 16 sowie ein Lenkrohr 18 auf. In dem Lenkrohr 18 ist ein schwenkbares Rohr angeordnet, das mit einem Lenker 20 verbunden ist. Ferner ist zwischen dem Unterrohr 16 und dem Sattelrohr 14 im dargestellten Ausführungsbeispiel eine Antriebseinrichtung 22 angeordnet. Diese weist ein herkömmliches Tretlager auf, das mit einem Elektromotor verbunden ist, so dass das Treten von einem Elektromotor unterstützt werden kann. Der Antrieb eines Hinterrades 24 erfolgt über einen üblichen hier nicht dargestellten Antrieb mittels Kette, Zahnriemen oder dergleichen. Ferner weist der Lastenfahrrad-Rahmen 10 einen Hinterbau 26 auf, der das Hinterrad 24 trägt. In dem dargestellten Ausführungsbeispiel ist ein einspuriges Lastenfahrrad dargestellt.

Ferner weist der Fahrradrahmen 10 ein Tragelement 28 auf. Das Tragelement 28 weist im dargestellten Ausführungsbeispiel zwei horizontale Rahmenelemente 30 auf, die mit dem Unterrohr 16 sowie dem Lenkrohr 18 verbunden sind. Mit den beiden horizontal verlaufenden Rahmenelementen 30 sind zwei im dargestellten Ausführungsbeispiel in Fahrtrichtung 34 steigend verlaufende Gabelelemente 32 angeordnet. Diese sind im Bereich eines Gabelschafts 36 miteinander und mit diesem verbunden. Der Gabelschaft 36 ist Teil eines ferner auch die Gabel 38 umfassenden Gabelelements 40, welches im dargestellten Ausführungsbeispiel ein Vorderrad 42 trägt.

Eine Batterie 44 kann mit dem Tragelement 28 verbunden sein. Im dargestellten Ausführungsbeispiel ist die Batterie 44 zwischen den beiden Gabelelementen 32 des Tragelements angeordnet. Ferner kann die Batterie 44 oder eine weitere Batterie zwischen den beiden Rahmenelementen 30 angeordnet sein.

Mit dem Lenkrohr 18 ist ein Griffelement 46 verbunden. Im dargestellten Ausführungsbeispiel ist das Griffelement an einer Rückseite des Lenkrohrs 18 angeordnet und weist in Richtung des Hinterbaus 26 bzw. in Richtung des Sattelrohrs 14. Das Griffelement 46 ist somit in der Rahmenmittelebene angeordnet, in der beim dargestellten Lastenfahrrad auch die beiden Räder sowie das Sattelrohr 14, das Unterrohr 16 und das Lenkrohr 18 angeordnet sind.

Um das Lastenrad anzuheben oder beispielsweise auf einen Hauptständer 48 zu heben, kann der Nutzer insbesondere am oberen Teil 46 des Griffelements angreifen.

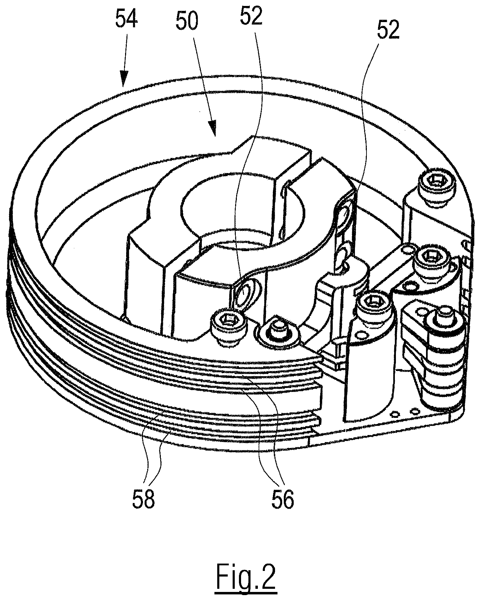

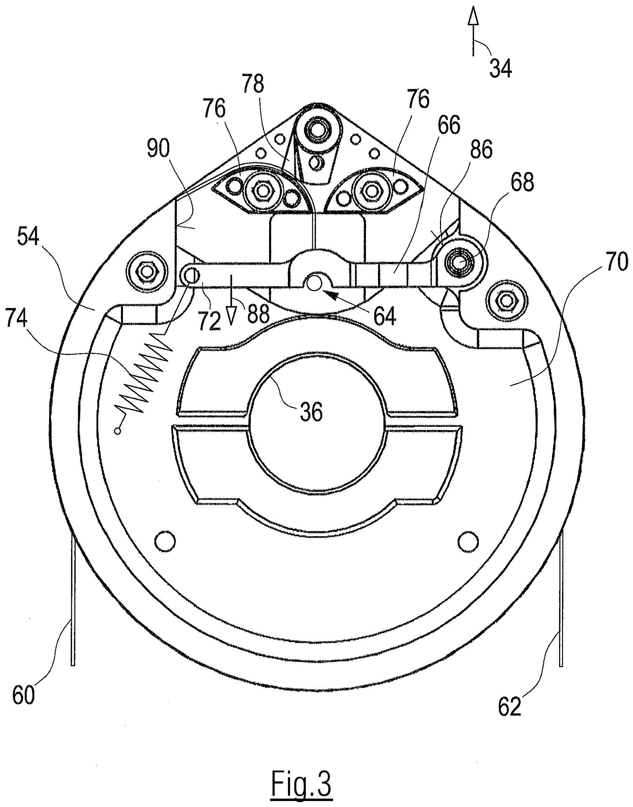

Die in den Figuren 1 bis 3 dargestellte Ausführungsform der Seilzug-Lenkscheibe kann entweder mit dem Lenkschaft oder dem Gabelschaft verbunden sein, wobei es auch möglich ist, dass sowohl mit dem Lenkschaft als auch mit dem Gabelschaft eine entsprechende Seilzug-Lenkscheibe verbunden ist. Der Lenkschaft ist im Lenkrohr 18 angeordnet und mit dem Lenker 20 verbunden. Der Gabelschaft 36 ist mit der Gabel 38 verbunden und im Gabelrohr angeordnet.

Die Verbindung mit dem Lenkschaft oder dem Gabelschaft erfolgt über eine Halteeinrichtung 50. Das Befestigen an dem Gabelschaft 36 erfolgt vorzugsweise klemmend über die beiden Teile der Halteeinrichtung 50 mittels Klemmschrauben 52. Die Seilzug-Lenkscheibe weist ferner ein teilringförmiges Führungselement 54 auf. Dieses weist ein oberes Rillenpaar 56 sowie ein unteres Rillenpaar 58 auf. In dem oberen Rillenpaar 56 sind beispielsweise zwei Lenkzüge 60 geführt, die bezogen auf eine Fahrtrichtung 34 zum Lenken nach links dienen. In den unteren Rillen 58 sind sodann zwei Lenkzüge 62 geführt, die zum Lenken nach rechts dienen. Die beiden Rillenpaare 56, 58 müssten sich nicht unbedingt um das gesamte Führungselement herum erstrecken. Vielmehr wäre es ausreichend, wenn die Rillen in den Bereichen angeordnet sind, in denen die Lenkzüge 60 bzw. 62 während des Lenkvorgangs geführt werden müssen. Aus Gründen der Redundanz sind jeweils zwei Lenkzüge bzw. 62 zum Lenken nach links bzw. rechts vorgesehen.

Ein freies Ende 64 des Seilzugs 60 ist mit dem im dargestellten Ausführungsbeispiel als Schwenkhebel 66 ausgebildeten Fixierelement verbunden. Auf unterschiedlicher Höhe sind die beiden freien Enden 64 der Lenkzüge 60 sowie die beiden freien Enden der Lenkzüge 62 mit dem Schwenkhebel verbunden, wobei aus Gründen der Übersichtlichkeit nur das freie Ende 64 des Lenkzugs 60 dargestellt ist. Im dargestellten Ausführungsbeispiel ist das freie Ende 64 des Lenkzuges 60 mit einer kopfförmigen Verdickung verbunden.

Der Schwenkhebel 66 des Fixierelements ist über eine Schwenkachse 68 fest mit einem Basiselement 70 der Seilzug-Lenkscheibe verbunden. Das Basiselement 70 kann fest mit dem Führungselement 54 verbunden oder auch einstückig mit diesem ausgebildet sein. Der Schwenkhebel 66 ist somit um die Schwenkachse 68 schwenkbar. Mit einem von der Schwenkachse 68 beabstandeten freien Ende 72 des Schwenkhebels 66 ist ein im dargestellten Ausführungsbeispiel als Spannfeder ausgebildetes Spannelement 74 verbunden. Durch das Spannelement 74 wird stets eine Zugkraft auf die Lenkzüge 60, 62 aufgebracht. Im dargestellten Ausführungsbeispiel erfolgt die Verbindung der Lenkzüge 60, 62 in einem mittleren Bereich des Schenkhebels 66.

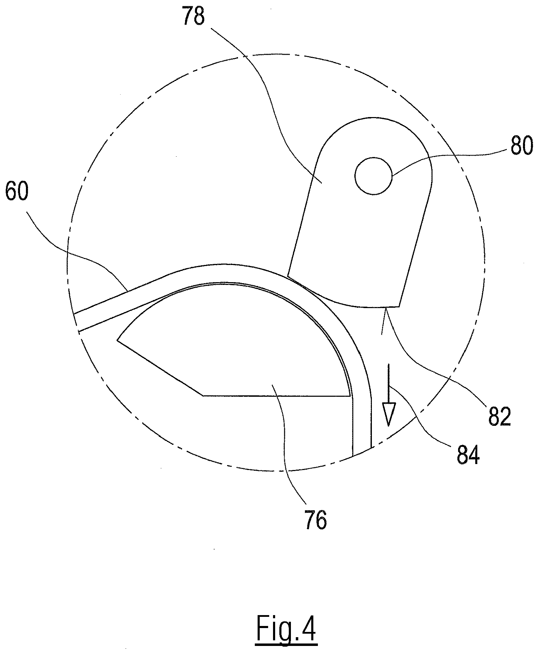

Ferner sind im dargestellten Ausführungsbeispiel zwei Umlenkelemente 76 vorgesehen und insbesondere fest mit dem Basiselement 70 verbunden. Die Umlenkelemente dienen zum Umlenken der Lenkzüge 60 bzw. 62 in Richtung des Fixierelements bzw. des Schwenkhebels 66. Die Umlenkelemente 76 sind somit bezogen auf die Anordnung der Lenkzüge 60, 62 jeweils zwischen dem Führungselement 54 und dem Fixierelement 66 angeordnet. Mit den Umlenkelementen 76 wirken Klemmhebel 78 zusammen, wobei im dargestellten Ausführungsbeispiel je Lenkzug 60, 62 ein gesonderter Klemmhebel 78 vorgesehen ist. Der Klemmhebel 78 (Figur 4) ist um eine Achse 80 schwenkbar. Aufgrund der Anordnung und Ausgestaltung des Klemmhebels 78 wirkt eine Klemmfläche 82 gegen den Lenkzug 60, wobei das Umlenkelement 76 eine Andrückfläche ausbildet. Aufgrund der Ausgestaltung der Andrückfläche 82 und der geometrischen Anordnung des Klemmhebels 78 kann der Lenkzug 60 nur in Richtung eines Pfeils 84 bewegt werden. Bei dieser Bewegung handelt es sich um die durch das Spannelement 74 ausgeführte Bewegung zum Spannen der Lenkzüge 60, 62. Die beim Lenken in entgegensetzte Richtung auftretende Kraft führt dazu, dass die Lenkzüge 60, 62 klemmend zwischen den Umlenkelementen 76 und dem entsprechenden Klemmhebel 78 fixiert sind. Hierdurch ist sichergestellt, dass die Lenkkraft nicht auf das Spannelement 74 übertragen wird.

Anstelle des Umlenkelements 76 könnte das klemmende Fixieren auch durch Anordnung eines Klemmhebels in einer anderen Lage erfolgen. Auch könnte ein Lenkzug zwischen zwei einander gegenüberliegenden Klemmhebeln angeordnet werden, so dass wiederum nur das Bewegen Lenkzuges in Spannrichtung möglich ist.

Ein entsprechender Klemmhebel 78 könnte auch mit der Außenfläche 86 des Schwenkhebels 66 zusammenwirken. Auch hierdurch wäre sichergestellt, dass der Schwenkhebel 66 zum Spannen der Lenkzüge 60, 62 ausschließlich in Spannrichtung, d.h. in Richtung eines Pfeils 88 bewegt werden kann.

Anstelle von Klemmhebeln könnten auch andere Hemmungselemente vorgesehen sein, die beispielsweise ein Zurückdrehen des Schwenkhebels 66 entgegen der Spannrichtung 88 sicherstellen. Hierzu könnte beispielsweise in Verbindung mit der Schwenkachse 68 ein Sperrklinkenmechanismus vorgesehen sein. Entsprechende Sperrklinken könnten auch am freien Ende 64 des Schwenkhebels 66 vorgesehen sein und mit der gegenüberliegenden Innenseite 90 des Basiselements bzw. des Führungselements 54 zusammenwirken.

Zum Auswechseln oder Justieren der Lenkzüge von Hand ist es jeweils möglich, die Hemmungselemente manuell zu lösen. Dies kann bei den Klemmhebeln 78 durch Verschwenken der Klemmhebel in Figur 4 entgegen des Uhrzeigersinns erfolgen, d.h. durch Schwenken der Klemmhebel entgegen der Klemmrichtung.

Ferner kann zum manuellen Spannen beispielsweise im Bereich des freien Endes 72 des Schwenkhebels 66 ein Spannelement wie eine Spannschraube vorgesehen sein, die den Schwenkhebel 66 in Spannrichtung 88 bewegt.

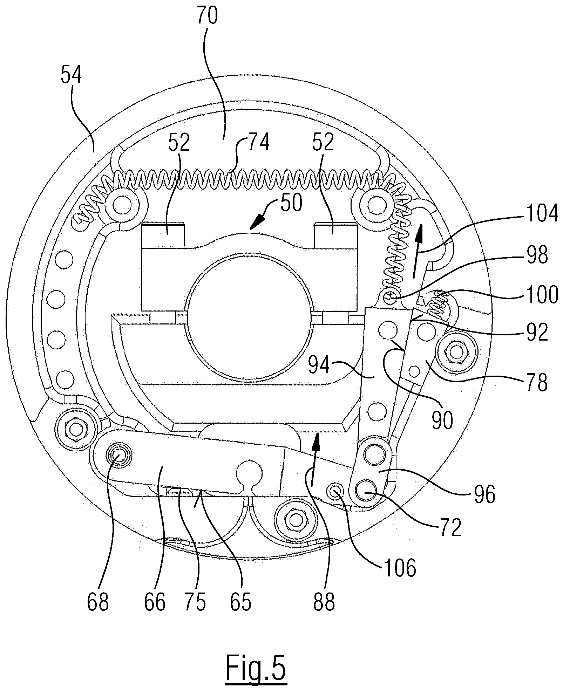

In den Figuren 5-7 ist eine weitere bevorzugte Ausführungsform einer SeilzugLenkscheibe dargestellt. Ähnliche und identische Bauteile sind mit denselben Bezugszeichen wie in den vorstehend beschriebenen Ausführungsformen bezeichnet.

Der wesentliche Unterschied der in den Figuren 5-7 dargestellten Ausführungsform besteht in der Ausgestaltung und Anordnung des Hemmungselements 78. Das Hemmungselement 78 kann mit dem Basiselement 70 fest verbunden sein. Wie in Figur 5 dargestellt, kann das Hemmungselement 78 auch verschiebbar gehalten sein. Hierbei ist das Hemmungselement 78 federbelastet, um ein zuverlässiges Klemmen sicherzustellen. Ferner weist das Hemmungselement 78 eine Klemmfläche 90 auf. Die Klemmfläche 90 wirkt mit einer Klemmfläche 92 eines Verbindungselement 94 zusammen. Das Verbindungselement 94 ist über ein Gelenkelement 96 mit dem Schwenkhebel 66 verbunden. An der gegenüberliegenden Seite ist das Verbindungselement 94 mit dem insbesondere als Spannfeder ausgebildeten Spannelement 74 verbunden. Dieses ist am Basiselement 70 fixiert. Die mit dem Hemmungselement 78 verbundene Feder 100 wirft der Feder 74 entgegen.

Die Klemmfläche 90 weist bezogen auf eine Kraftrichtung 104 des Federelements 74 einen Winkel ungleich null Grad auf. Die Ausrichtung der Klemmfläche 90 ist hierbei keilförmig. Hierdurch erfolgt ein klemmendes Fixieren durch die von den Seilzügen 60, 62 auf das Fixierelement 66 wirkenden Kräfte.

Im dargestellten Ausführungsbeispiel sind die Klemmflächen 90, 92 im Wesentlichen als glatte bzw. raue ebene Flächen ausgebildet, sodass die Klemmung durch Reibung erfolgt. Zusätzlich könnten an den Flächen 90, 92 Rastelemente, Zähne, Ansätze oder dergleichen angeordnet sein, wobei sodann der Winkel zwischen der Zugkraft 104 und der Oberseite der Fläche 90 auch 0° sein kann, sodass die Fläche im Wesentlichen parallel zur Kraftrichtung 104 ausgerichtet ist.

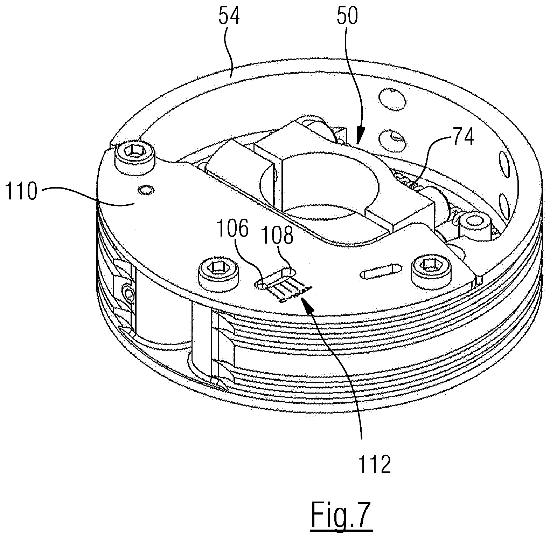

Zur Ausbildung einer Justageanzeige ist an einer Oberseite des Schwenkhebels 66 ein stiftförmiger Ansatz 106 angeordnet. Der stiftförmige Ansatz 106 endet in einem Schlitz 108 (Figur 7). Der Schlitz 108 ist in einem Deckelelement 110 angeordnet, wobei an der Oberseite des Deckelelements 110 im Bereich des Schlitzes eine Skala 112 vorgesehen ist. Hierdurch kann ein Benutzer auf einfache Weise feststellen, ob eine weitere Spannung der Zugseile möglich ist oder ob diese sich bereits um einen maximal zulässigen Betrag gelenkt haben.

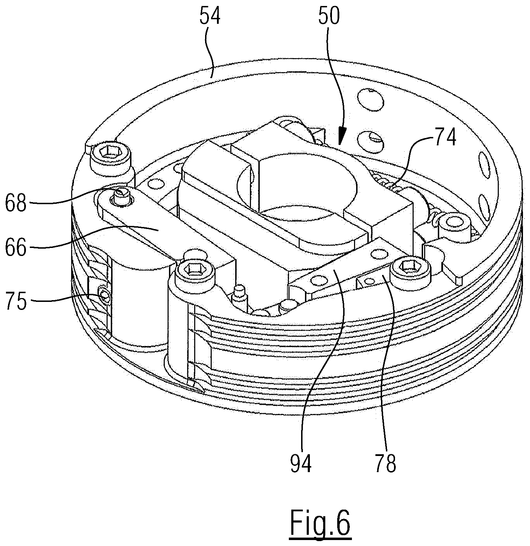

Bei einer weiteren Ausführungsform kann die Feder 74 oder ein anders automatisches Spannelement entfallen. Bei dieser Ausführungsform erfolgt sodann ein manuelles Spannen der Lenkzüge bzw. Seilzüge 60. Dies kann durch unterschiedlich ausgebildete manuelle Spannelement erfolgen, durch die ein Bewegen des Schwenkhebels 66 in Richtung des Pfeils 88 erfolgt. Beispielsweise ist es möglich mit Hilfe einer Spannschraube 75 (Figur 5 und 6) auf eine Vorderseite 65 des Schwenkhebels 66 einzuwirken. Im dargestellten Ausführungsbeispiel drückt die Schraube 75 unmittelbar auf die Vorderseite 65. Das Verwenden einer Spannschraube 75, bei der es sich im dargestellten Ausführungsbeispiel um eine Madenschraube handelt, hat ferner den Vorteil, dass aufgrund des Gewindes eine Selbsthemmung auftritt, so dass ein Lösen der Schraube vermieden ist. Anstelle einer auf die Vorderseite 65 des Schwenkhebels 66 wirkenden Schraube, könnte auch ein Exzenter auf die Vorderseite 65 einwirken. Auch könnte an der in Figur 5 nach oben weisenden Oberseite des Schwenkhebels 66 ein Ansatz oder dergleichen vorgesehen sein, auf den ein Spannelement einwirkt. Bevorzugt bei einer mechanischen nicht automatischen Spannung der Lenkzüge 60 ist es, dass dieses Spannelement auf den Schwenkhebel 66 mittelbar oder unmittelbar einwirkt. Hierdurch ist eine zuverlässige Spannung der Lenkzüge möglich. Ferner ist es bei dieser Ausführungsform nicht erforderlich, dass ein Spannelement in die Lenkzüge integriert ist oder unmittelbar im Kraftfluss angeordnet ist.

Auch könnte ein Spannelement in die Schwenkachse 68 des Schwenkhebels 66 integriert sein.

Das Vorsehen von Hemmungselementen entsprechend Figur 4 oder entsprechend der in den Figuren 5 bis 7 dargestellten Ausführungsform ist nicht zwingend erforderlich. Insbesondere bei mechanischen Spannelementen können derartige Hemmungselemente entfallen, wobei das Vorsehen von Hemmungselementen weiterhin bevorzugt ist.

## Patentansprüche

1. Seilzug-Lenkscheibe für Fahrrad-Lenkeinrichtung mit
einer Halteeinrichtung (50) zum Verbinden mit einem Lenkerschaft und/oder einem Gabelschaft,
einem die Halteeinrichtung (50) teilweise umgebenden Führungselement (54) für ein Lenkzugpaar (60, 62),
einem Fixierelement (66) zum Fixieren der Enden (64) des Lenkzugpaars (60, 62) und
einem auf das Fixierelement (66) einwirkenden Spannelement (74, 75) zum Spannen des Lenkzugpaars (60, 62),
**dadurch gekennzeichnet, dass**
das Fixierelement einen Schwenkhebel (66) aufweist, der über eine Schwenkachse (68) mit einem Basiselement (70) der Seilzug-Lenkscheibe schwenkbar gehalten ist.

2. Seilzug-Lenkscheibe nach Anspruch 1, **dadurch gekennzeichnet, dass** das Fixierelement (66) zum Spannen schwenkbar und/oder verschiebbar ist.

3. Seilzug-Lenkscheibe nach Anspruch 1 oder 2, **dadurch gekennzeichnet, dass** das Spannelement eine Spannfeder (74) aufweist.

4. Seilzug-Lenkscheibe nach einem der Ansprüche 1 bis 3, **dadurch gekennzeichnet, dass** das Spannelement (74) mit einem freien Ende (72) des Schwenkhebels (66) verbunden ist.

5. Seilzug-Lenkscheibe nach einem der Ansprüche 1 bis 4, **dadurch gekennzeichnet, dass** die Fixierung der Lenkzüge (60, 62) in einem mittleren Bereich des Schwenkhebels erfolgt.

6. Seilzug-Lenkscheibe nach einem der Ansprüche 1 bis 5, **dadurch gekennzeichnet, dass** alle Lenkzüge (60, 62) an einem gemeinsamen Fixierelement (66), insbesondere an einem gemeinsamen Schwenkhebel (66) fixiert sind.

7. Seilzug-Lenkscheibe nach einem der Ansprüche 1 bis 6, **gekennzeichnet durch** ein Hemmungselement (78), das ein Bewegen der Lenkzüge (60, 62) entgegen einer Spannrichtung (88) verhindert.

8. Seilzug-Lenkscheibe nach Anspruch 7, **dadurch gekennzeichnet, dass** das Hemmungselement einen auf die Lenkzüge (60, 62) einwirkenden Klemmhebel (78) aufweist.

9. Seilzug-Lenkscheibe nach Anspruch 8, **dadurch gekennzeichnet, dass** ein Klemmhebel (78) für mehrere, insbesondere alle Lenkzüge (60, 62) vorgesehen ist.

10. Seilzug-Lenkscheibe nach Anspruch 7, **dadurch gekennzeichnet, dass** das Hemmungselement (78) mittelbar oder unmittelbar auf das Fixierelement einwirkt, wobei der Klemmhebel vorzugsweise auf ein die Schwenkachse (68) umgebendes Ende (86) des Schwenkhebels (66) einwirkt.

11. Seilzug-Lenkscheibe nach einem der Ansprüche 1 bis 10, **gekennzeichnet durch** ein, insbesondere zwei zwischen dem Führungselement (54) und dem Fixierelement (66) angeordneten Umlenkelementen (76), wobei vorzugsweise mit dem insbesondere jedem Umlenkelement (76) ein Hemmungselement, insbesondere ein Klemmhebel (78) zusammenwirkt.

12. Seilzug-Lenkscheibe nach Anspruch 10, **dadurch gekennzeichnet, dass** das Hemmungselement (78) fest mit dem Basiselement (70) verbunden ist und/oder eine Klemmfläche (90) aufweist, wobei die Klemmfläche (90) vorzugsweise in einem Winkel ungleich null Grad zu einer durch das Spannelement (74) auf das Fixierelement (66) wirkende Kraftrichtung (104) angeordnet ist.

13. Seilzug-Lenkscheibe nach Anspruch 12, **gekennzeichnet durch** ein zwischen dem Fixierelement (66) und dem Spannelement (74) angeordnetes Verbindungselement (94), wobei das Verbindungselement (94) vorzugsweise eine mit der Klemmfläche (90) des Hemmungselements (78) zusammenwirkende Klemmfläche (92) aufweist.

14. Seilzug-Lenkscheibe nach einem der Ansprüche 1 bis 13, **dadurch gekennzeichnet, dass** mittels einer Justageanzeige (106, 112) ein Anzeigen der erfolgten Nachspannung erfolgt, wobei die Justageeinrichtung (106, 112) vorzugsweise ein mit dem Fixierelement (66) verbundenes Zeigerelement (106) aufweist, das mit einer Skala (112) zusammenwirkt.

## Claims

1. Cable pull steering disc for a bicycle steering means, comprising
a holding device (50) for connection to a handlebar tube and/or a head tube,
a guide element (54) for a pair of steering cables (60, 62), the guide element partially surrounding the holding means (50),
a fixing element (66) for fixing the ends (64) of the pair of steering cables (60, 62), and
a tensioning element (74, 75) for tension the pair of steering cables (60, 62), the tensioning element acting on the fixing element (66),
**characterized in that**
the fixing element comprises a pivot lever (66) held in a manner pivotable with a base element (70) of the cable pull steering disc via a pivot axis (68).

2. Cable pull steering disc according to claim 1, **characterized in that** the fixing element (66) can be pivoted and/or shifted to be fixed.

3. Cable pull steering disc according to claim 1 or 2, **characterized in that** the tensioning element comprises a tensioning spring (74).

4. Cable pull steering disc according to any one of claims 1 to 3, **characterized in that** the tensioning element (74) is connected to a free end (72) of the pivot lever (66).

5. Cable pull steering disc according to any one of claims 1 to 4, **characterized in that** the steering cables (60, 62) are fixed in a central portion of the pivot lever.

6. Cable pull steering disc according to any one of claims 1 to 5, **characterized in that** all steering cables (60, 62) are fixed at a common fixing element (66), in particular at a common pivot lever (66).

7. Cable pull steering disc according to any one of claims 1 to 6, **characterized by** a restraining element (78) that prevents a movement of the steering cables (60, 62) against a tensioning direction.

8. Cable pull steering disc according to claim 7, **characterized in that** the restraining element comprises a clamping lever (70) acting on the steering cables (60, 62).

9. Cable pull steering disc according to claim 8, **characterized in that** one clamping lever (78) is provided for a plurality, in particular for all steering cables (60, 62).

10. Cable pull steering disc according to claim 7, **characterized in that** the restraining element (78) acts indirectly or directly on the fixing element, wherein the clamping lever preferably acts on an end (86) of the pivot lever (66) surrounding the pivot axis (68).

11. Cable pull steering disc according to any one of claims 1 to 10, **characterized by** one, in particular two deflection elements (76) arranged between the guide element (54) and the fixing element (66), wherein preferably a restraining element, in particular a clamping lever (78) cooperates with the, in particular each deflection element (76).

12. Cable pull steering disc according to claim 10, **characterized in that** the restraining element (78) is fixedly connected to the base element (70) and/or comprises a clamping surface (90), wherein the clamping surface (90) is arranged preferably under an angle different from zero degrees with respect to a direction of force (104) acting on the fixing element (66) via the tensioning element (74).

13. Cable pull steering disc according to claim 12, **characterized by** a connection element (94) arranged between the fixing element (66) and the tensioning element (74), wherein the connection element (94) preferably comprises a clamping surface (92) cooperating with the clamping surface (90) of the restraining element (78).

14. Cable pull steering disc according to any one of claims 1 to 13, **characterized in that** a re-tensioning performed is indicated by means of an adjustment indicator (106, 112), wherein the adjusting means (106, 112) preferably comprises an indicator element (106) connected to the fixing element (66), the indicator element cooperating with a scale (112).

## Revendications

1. Disque de direction à câble pour dispositif de direction de bicyclette, doté
d'un dispositif de maintien (50) destiné à être relié à une tige de guidon et/ou une tige de fourche
d'un élément de guide (54) entourant partiellement le dispositif de maintien (50) pour une paire de câbles de direction (60, 62),
d'un élément de blocage (66) destiné à bloquer les extrémités (64) de la paire de câbles de direction (60, 62) et
d'un élément de tension (74, 75) agissant sur l'élément de blocage (66) afin de tendre la paire de câbles de direction (60, 62),
**caractérisé en ce que**
l'élément de blocage comporte un levier de pivot (66), lequel est maintenu pivotant avec un élément de base (70) du disque de direction à câble par le biais d'un axe de pivot (68) .

2. Disque de direction à câble selon la revendication 1, **caractérisé en ce que** l'élément de blocage (66) peut pivoter et/ou glisser à fins de tension.

3. Disque de direction à câble selon la revendication 1 ou 2, **caractérisé en ce que** l'élément de tension comporte un ressort de tension (74).

4. Disque de direction à câble selon l'une des revendications 1 à 3, **caractérisé en ce que** l'élément de tension (74) est relié à une extrémité libre (72) du levier de pivot (66).

5. Disque de direction à câble selon l'une des revendications 1 à 4, **caractérisé en ce que** le blocage des câbles de direction (60, 62) s'effectue dans une zone médiane du levier de pivot.

6. Disque de direction à câble selon l'une des revendications 1 à 5, **caractérisé en ce que** tous les câbles de direction (60, 62) sont bloqués sur un même élément de blocage (66), en particulier sur un même levier de pivot (66).

7. Disque de direction à câble selon l'une des revendications 1 à 6, **caractérisé par** un élément inhibiteur (78), lequel empêche un déplacement des câbles de direction (60, 62) opposé à une direction de tension (88) .

8. Disque de direction à câble selon la revendication 7, **caractérisé en ce que** l'élément inhibiteur comporte un levier de serrage (78) agissant sur les câbles de direction (60, 62).

9. Disque de direction à câble selon la revendication 8, **caractérisé en ce qu'**un levier de serrage (78) est prévu pour plusieurs des câbles de direction (60, 62), en particulier pour tous.

10. Disque de direction à câble selon la revendication 7, **caractérisé en ce que** l'élément inhibiteur (78) agit directement ou indirectement sur l'élément de blocage, dans lequel le levier de serrage agit de préférence sur une extrémité (86) du levier de pivot (66) entourant l'axe de pivot (68).

11. Disque de direction à câble selon l'une des revendications 1 à 10, **caractérisé par** un, en particulier deux, éléments de renvoi (76) disposés entre l'élément de guidage (54) et l'élément de blocage (66), dans lequel un élément inhibiteur, en particulier un levier de serrage (78), coopère avec l'élément de renvoi (76) en particulier chacun des éléments de renvoi.

12. Disque de direction à câble selon la revendication 10, **caractérisé en ce que** l'élément inhibiteur (78) est relié de manière fixe à l'élément de base (70) et/ou comporte une surface de serrage (90), dans lequel la surface de serrage (90) est de préférence disposée de manière à former un angle non nul par rapport à une direction de la force (104) que l'élément de tension (74) exerce sur l'élément de blocage (66).

13. Disque de direction à câble selon la revendication 12, **caractérisé par** un élément de liaison (94) disposé entre l'élément de blocage (66) et l'élément de tension (74), dans lequel l'élément de liaison (94) comporte de préférence une surface de serrage (92) coopérant avec la surface de serrage (90) de l'élément inhibiteur (78).

14. Disque de direction à câble selon l'une des revendications 1 à 13, **caractérisé en ce qu'**un affichage de l'ajustement de tension obtenu est effectué au moyen d'un afficheur d'ajustage (106, 112), dans lequel le dispositif d'ajustage (106, 112) comporte de préférence un élément d'aiguille (106) relié à l'élément de blocage (66), lequel coopère avec une graduation (112).
